## Europäisches Patentamt

## European Patent Office

## Office européen des brevets

(19)

(11) Veröffentlichungsnummer: **0 008 046**
**B1**

(12) **EUROPÄISCHE PATENTSCHRIFT**

(45) Veröffentlichungstag der Patentschrift:
**12.08.81**

(21) Anmeldenummer: **79102679.2**

(22) Anmeldetag: **27.07.79**

(51) Int. Cl.³: **C 08 K 5/16**, C 08 K 5/15,
C 08 L 67/02

(54) Stabilisierte Polyalkylenterephthalat-Formmassen und ihre Verwendung zur Herstellung von Formkörpern, Folien, Monofilen und Fasern.

(30) Priorität: **03.08.78 DE 2834032**

(43) Veröffentlichungstag der Anmeldung:
**20.02.80 Patentblatt 80/4**

(45) Bekanntmachung des Hinweises auf die Patenterteilung:
**12.08.81 Patentblatt 81/32**

(84) Benannte Vertragsstaaten:
**BE CH DE FR GB IT NL**

(56) Entgegenhaltungen:
**DE-A1-2 400 097
DE-A1-2 501 988
DE-A1-2 655 457
DE-B2-2 303 631
US-A1-3 886 104**

(73) Patentinhaber: **BASF Aktiengesellschaft,
Carl-Bosch-Strasse 38, D-6700 Ludwigshafen (DE)**

(72) Erfinder: **Sterzel, Hans-Josef, Dr., Haardtstrasse 13,
D-6701 Dannstadt-Schauernheim 1 (DE)**
Erfinder: **Wurmb, Rolf, Dr., Kastellweg 10,
D-6900 Heidelberg (DE)**
Erfinder: **Schmidt, Franz, Dr., Trommstrasse 3,
D-6800 Mannheim 1 (DE)**
Erfinder: **Seiler, Erhard, Dr., Erpolzheimer Strasse 1,
D-6700 Ludwigshafen (DE)**

## Stabilisierte Polyalkylenterephthalat-Formmassen und ihre Verwendung zur Herstellung von Formkörpern, Folien, Monofilen und Fasern

Die Erfindung betrifft Polyalkylenterephthalat-Formmassen, die als Stabilisator eine Diepoxidverbindung, sowie einen Katalysator enthalten.

Polyalkylenterephthalate können im Spritzgußverfahren zu verschiedenartigen Formkörpern und durch Extrusion zu Platten, Folien, Monofilen und Fasern verarbeitet werden. Die Verarbeitung erfolgt im Fall von Polyäthylenterephthalat bei Temperaturen um 270 bis 300°C und im Fall von Polybutylenterephthalat bei 240 bis 280°C. Bei diesen Temperaturen tritt in Abhängigkeit von der Verweilzeit ein mehr oder weniger starker molekularer Abbau ein, der eine Verschlechterung der mechanischen Eigenschaften zur Folge hat.

Es gibt bereits eine Anzahl von Vorschlägen, diesen thermisch verursachten molekularen Abbau zu vermindern oder ganz zu verhindern. Mit am erfolgreichsten erscheint die Methode, die durch den Abbau entstandenen Carboxylendgruppen über Diepoxide miteinander zu verknüpfen und so den Abfall des Molekulargewichts zu verhindern. So ist z. B. in der DE-OS 24 00 097 ein Verfahren zur Steigerung der Schmelzelastizität von linearen Polyester-Harzen beschrieben, denen eine organische Verbindung, die wenigstens zwei Epoxidgruppen enthält, zugesetzt wird.

In vielen Fällen ist die Reaktionsgeschwindigkeit zwischen den Carboxylgruppen und den Diepoxiden jedoch zu gering, um genügend große Effekte zu erzielen. Deshalb wurde versucht, diese Reaktion durch Katalysatoren zu beschleunigen. Als derartige Katalysatoren werden in der DE-OS 2 501 988 Aminverbindungen und Ammoniumverbindungen, in der DE-OS 2 655 457 Phosphoniumhalogenide vorgeschlagen.

Bei der näheren Untersuchung muß man jedoch feststellen, daß im Fall der beschriebenen tertiären Amine, zumindest bei nicht glasfaserverstärkten Formmassen, die Reaktionsgeschwindigkeit zwischen Carboxylgruppen und Diepoxiden nur unwesentlich erhöht wird, und daß zudem eine Farbverschlechterung eintritt. Im Fall der Phosphoniumhalogenide wird ebenfalls eine erheblich verstärkte Verfärbung der Formmassen erhalten.

Der Erfindung lag also die Aufgabe zugrunde, Katalysatoren zu finden, welche die Reaktion zwischen Carboxylgruppen und Diepoxid in der gewünschten Weise beschleunigen, ohne zu einer Farbverschlechterung der Formmassen zu führen. Diese Aufgabe wird erfindungsgemäß dadurch gelöst, daß man Polyalkylenterephthalat-Formmassen, die als Stabilisator 0,1 bis 3,0 Gewichtsprozent eines Diepoxids mit einem Molekulargewicht zwischen 200 und 2000 enthalten, 0,001 bis 0,5 Gew.-%, vorzugsweise von 0,01 bis 0,2 Gew.-%, bezogen auf die Formmassen, eines Alkalimetallsalzes eines Chelatbildners, welches mindestens eine $-N(CH_2-COO^-)_2$-Gruppe im Molekül trägt, als Katalysator zusetzt.

Die Katalysatoren sind also vorzugsweise Verbindungen der allgemeinen Formel $R-N(CH_2-COO^-)_2$, wobei R eine $-CH_2-COO^--$, eine Alkyl-, eine Cycloalkyl- oder Aralkylgruppe ist, die wiederum durch eine $-N(CH_2-COO^-)_2$- oder eine $-N(CH_2-COOH)_2$-Gruppe substituiert sein können. Als Alkalimetall ist Natrium bevorzugt, es können aber auch Kalium- oder Lithiumsalze eingesetzt werden.

Besonders bevorzugt sind das Trinatriumsalz der Nitrilotriessigsäure, das Di- oder Tetranatriumsalz der Äthylendiamintetraessigsäure, das Dinatriumsalze der Uranildiessigsäure und das Di- oder Tetranatriumsalz der 1,2-Diaminocyclohexantetraessigsäure.

Als Polyalkylenterephthalate kommen insbesondere Polyäthylenterephthalat und Polybutylenterephthalat in Frage, wobei neben den Homopolyestern auch Copolyester eingesetzt werden können, die geringe Mengen (vorzugsweise bis zu jeweils 10 Mol-%) anderer Dicarbonsäuren, wie Naphthalindicarbonsäure, Isophthalsäure, Adipinsäure, oder anderer Diole, wie Äthylenglykol, Propylenglykol, Butandiol oder Hexadiol enthalten. Die relative Viskosität der eingesetzten Polyester (gemessen bei 23°C in einem Gemisch aus Phenol/ortho-Dichlorbenzol von 1 : 1 bei einer Konzentration von 0,5 g/100 ml), liegt bevorzugt zwischen 1,3 und 1,8.

Die Formmassen enthalten als Stabilisatoren 0,1 bis 3,0, vorzugsweise 0,2 bis 1,0 Gew.-% einer Diepoxidverbindung. Als Diepoxide kommen beispielsweise in Frage: 1,4-Dimethylolcyclohexandiglycidäther, Bis(3,4-epoxicyclohexylmethyl)-adipat, epoxidierten Novolack und epoxidiertes Sojabohnenöl. Bevorzugt sind die Diglycidyläther von Bisphenol A, die durch Umsetzung von Bisphenol A mit Epichlorhydrin im Molverhältnis zwischen 1 : 2 und 1 : 1,1 hergestellt werden können.

Die erfindungsgemäße Polyalkylenterephthalat-Formmassen können die üblichen Zusatzstoffe, wie Pigmente, Keimbildner, sonstige Stabilisatoren, Entformungshilfsmittel, Flammschutzmittel, sowie verstärkend wirkende Füllstoffe, wie Glasfasern, Glaskugeln, Talkum, Kaolin oder Kreide enthalten.

Die Zugabe der erfindungsgemäßen Katalysatoren und des Diepoxids, sowie gegebenenfalls der Zusatzstoffe zu dem Polyalkylenterephthalat erfolgt nach dem Stand der Technik mittels eines Extruders oder eines sonstigen Mischorgans, wobei das Polyalkylenterephthalat oberhalb seines Schmelzpunktes innig mit den zugesetzten Substanzen vermischt wird.

Durch den Zusatz der erfindungsgemäßen Katalysatoren wird der Molekulargewichtsabbau bei der Verarbeitung stark verringert und damit der Temperatur- und Verweilzeitbereich bei der Verarbeitung erweitert. Außerdem wird die durch den Epoxidzusatz bedingte gelbliche bis gelbe Eigenfarbe stark

0 008 046

zurückgedrängt.
Die in den Beispielen genannten Teile und Prozente beziehen sich auf das Gewicht.

Beispiel 1

Polyäthylenterephthalat mit einer relativen Viskosität von 1,57 wurde bei einer Temperatur von 280°C mit 0,1% Talkum als Nukleierungsmittel, und 0,6% Bisphenol A-Diglycidyläther und verschiedenen Katalysatoren mittels eines Zweiwellenextruders vermischt. Die extrudierten Stränge wurden durch ein Wasserbad geführt und granuliert. Das Granulat wurde so lange getrocknet, bis der Wassergehalt kleiner als 0,02% war (bei 120°C 12 Stunden im Vakuum).

Zur Beurteilung der Verarbeitungsstabilität wurden auf einer Spritzgußmaschine bei 270°C bzw. 300°C Normkleinstäbe nach DIN 53 453 mit den Maßen 4×6×50 mm hergestellt. Die Formtemperatur betrug 140°C. Um die Schmelze besonders lang zu beanspruchen, wurde die Zykluszeit der Spritzgußmaschine auf 100 Sekunden eingestellt. Der Abfall der relativen Viskosität ist ein Maß für die Stabilität der Polyalkylenterephthalate. Je geringer mit steigender Schmelztemperatur der Abfall der relativen Viskosität ist, desto stabiler ist der Polyester. Die relative Viskosität wurde an 0,5%igen Lösungen in einem Lösungsmittelgemisch aus Phenol und o-Dichlorbenzol im Gewichtsverhältnis 3 : 2 bei 25°C gemessen. Sehr empfindlich auf den Molekulargewichtsabbau reagiert auch die Lochkerbschlagzähigkeit. In Anlehnung an den Schlagbiegeversuch nach DIN 53 453 wurde die Lochkerbschlagzähigkeit folgendermaßen gemessen: In die Mitte der 6×50 mm-Fläche der Normkleinstäbe wurden Löcher mit 3 mm Durchmesser gebohrt. Mittels eines Pendelschlagwerks wurde die Arbeit (in Kilojoule pro m²) gemessen, die verbraucht wird, wenn der Hammer des Schlagpendels auf die Fläche trifft und den Prüfkörper zerbricht. Je geringer der Abfall der Lochkerbschlagzähigkeit bei steigender Verarbeitungstemperatur ist, desto stabiler ist das Polyalkylenterephthalat.

In Tabelle 1, in welcher die Prüfungsergebnisse aufgeführt sind, ist außerdem noch eine visuelle Farbbeurteilung angegeben. Die folgenden Abkürzungen werden dabei verwendet:

THA     Tri-2-äthylhexylamin
TPP     Triphenylphosphin
NTA     Nitrilotriessigsäure-Trinatriumsalz
EDTA    Äthylendiamintetraessigsäure-Tetranatriumsalz

Tabelle 1

|  | Versuch a | b | c | d | e | f |
|---|---|---|---|---|---|---|
| Diepoxid % | − | 0,6 | 0,6 | 0,6 | 0,6 | 0,6 |
| Katalysator % | − | − | 0,1 THA | 0,1 TPP | 0,1 NTA | 0,1 EDTA |
| Rel. Viskosität |  |  |  |  |  |  |
| Granulat | 1,51 | 1,52 | 1,50 | 1,45 | 1,53 | 1,54 |
| Formkörper 270°C | 1,48 | 1,48 | 1,46 | 1,43 | 1,50 | 1,51 |
| Formkörper 300°C | 1,33 | 1,34 | 1,32 | 1,30 | 1,43 | 1,44 |
| Lochkerbschlagzähigkeit |  |  |  |  |  |  |
| Herst. b. 270°C | 29 | 30 | 28 | 25 | 32 | 32 |
| Herst. b. 300°C | 12 | 14 | 13 | 10 | 24 | 24 |
| Farbe | grauweiß | gelb | gelb | tiefgelb | grauweiß | grauweiß |

Die Versuche e und f sind erfindungsgemäß.

3

## Beispiel 2

In Anlehnung an Beispiel 1 wurde Polybutylenterephthalat einer relativen Viskosität von 1,67 mit dem Diepoxid und verschiedenen Katalysatoren stabilisiert, wobei die Einarbeitung bei 250°C erfolgte. Die relative Viskosität wurde bei 260 bzw. 290°C gemessen; die Formtemperatur wurde auf 60°C eingestellt. Tabelle 2 zeigt die Ergebnisse.

Tabelle 2

| | Versuch a | b | c | d | e | f |
|---|---|---|---|---|---|---|
| Diepoxid % | – | 0,6 | 0,6 | 0,6 | 0,6 | 0,6 |
| Katalysator % | – | – | 0,1 THA | 0,1 TPP | 0,1 NTA | 0,1 EDTA |
| Rel. Viskosität | | | | | | |
|    Granulat | 1,62 | 1,63 | 1,60 | 1,59 | 1,65 | 1,65 |
|    Formkörper 260°C | 1,59 | 1,62 | 1,58 | 1,57 | 1,63 | 1,64 |
|    Formkörper 290°C | 1,42 | 1,48 | 1,46 | 1,47 | 1,57 | 1,58 |
| Lochkerbschlagzähigkeit | | | | | | |
|    Herst. b. 260°C | 61 | 62 | 55 | 56 | 65 | 64 |
|    Herst. b. 290°C | 17 | 34 | 30 | 29 | 49 | 48 |
| Farbe | weiß | gelb | gelb | tiefgelb | weiß | weiß |

Die Versuche e und f sind erfindungsgemäß.

## Patentansprüche

1. Polyalkylenterephthalat-Formmassen, die als Stabilisator 0,1 bis 3,0 Gewichtsprozent eines Diepoxids mit einem Molekulargewicht zwischen 200 und 2000, sowie einen Katalysator enthalten, dadurch gekennzeichnet, daß als Katalysator 0,001 bis 0,5 Gewichtsprozent, bezogen auf die Formmassen, eines Alkalimetallsalzes eines Chelatbildners eingesetzt wird, welches mindestens eine $-N(CH_2-COO^-)_2$-Gruppe im Molekül trägt.

2. Polyalkylenterephthalat-Formmassen nach Anspruch 1, dadurch gekennzeichnet, daß der Katalysator das Trinatriumsalz der Nitrilotriessigsäure ist.

3. Polyalkylenterephthalat-Formmassen nach Anspruch 1, dadurch gekennzeichnet, daß der Katalysator das Tetranatriumsalz der Äthylendiamintetraessigsäure ist.

4. Formmassen nach Anspruch 1, dadurch gekennzeichnet, daß das Polyalkylenterephthalat Polyäthylenterephthalat ist.

5. Formmassen nach Anspruch 1, dadurch gekennzeichnet, daß das Polyalkylenterephthalat Polybutylenterephthalat ist.

6. Polyalkylen-Formmassen nach Anspruch 1, dadurch gekennzeichnet, daß das Diepoxid ein Diglycidyläther von Bisphenol A ist.

7. Verwendung der Formmassen nach Anspruch 1 zur Herstellung von Formkörpern, Folien, Monofilen und Fasern durch Spritzguß oder Extrusion.

## Claims

1. A poly(alkylene terephthalate) molding material which contains, as the stabilizer, from 0.1 to 3.0 percent by weight of a diepoxide of molecular weight from 200 to 2000, as well as a catalyst,

4

characterized in that there is used as catalyst from 0.001 to 0.5 percent by weight, based on the molding material, of an alkali metal salt of a chelating agent which possesses at least one $-N(CH_2-COO^-)_2$ group in the molecule.

2. A poly(alkylene terephthalate) molding material as claimed in claim 1, characterized in that the catalyst is trisodium nitrilotriacetate.

3. A poly(alkylene terephthalate) molding material as claimed in claim 1, characterized in that the catalyst is tetrasodium ethylenediaminetetraacetate.

4. A molding material as claimed in claim 1, characterized in that the poly(alkylene terephthalate) is poly(ethylene terephthalate).

5. A molding material as claimed in claim 1, characterized in that the poly(alkylene terephthalate) is poly(butylene terephthalate).

6. A poly(alkylene terephthalate) molding material as claimed in claim 1, characterized in that the diepoxide is a diglycidyl ether of bisphenol A.

7. Use of the molding material as claimed in claim 1 for the production of moldings, films, monofilaments and fibers by injection molding or extrusion.

## Revendications

1. Matières à mouler à base de poly(téréphtalate d'alcoylène), renfermant 0,1 à 3,0% en poids d'un di-époxyde d'un poids moléculaire compris entre 200 et 2000 comme stabilisant, ainsi qu'un catalyseur, caractérisées en ce qu'elles contiennent comme catalyseur entre 0,001 et 0,5% en poids, par rapport au poids de la matière à mouler, d'un sel de métal alcalin d'un complexant, dont la molécule contient au moins un groupe $-N-(CH_2-COO^-)_2$.

2. Matière à mouler à base de poly(téréphtalate d'alcoylène) suivant la revendication 1, caractérisée en ce que le catalyseur est le sel trisodique de l'acide nitrilo-tri-acétique.

3. Matière à mouler à base de poly(téréphtalate d'alcoylène) suivant la revendication 1, caractérisée en ce que le catalyseur est le sel tétrasodique de l'acide éthylène-diamine tétracétique.

4. Matière à mouler suivant la revendication 1, caractérisée en ce que le poly(téréphtalate d'alcoylène) est le poly(téréphtalate d'éthylène).

5. Matière à mouler suivant la revendication 1, caractérisée en ce que le poly(téréphtalate d'alcoylène) est le poly(téréphtalate de butylène).

6. Matières à mouler suivant la revendication 1, caractérisées en ce que le di-époxyde est un éther de diglycidyle du bisphénol A.

7. Utilisation des matières à mouler suivant la revendication 1 pour la préparation par moulage par injection ou par extrusion de pièces moulées, de feuils, de monofilaments et de fibres.